# EUROPÄISCHE PATENTSCHRIFT

(11) **EP 1 082 172 B1**
(45) Veröffentlichungstag und Bekanntmachung des Hinweises auf die Patenterteilung: **16.04.2003**
(21) Anmeldenummer: 99932654.9
(22) Anmeldetag: 07.05.1999
(51) Int. Cl.: B01J 35/04, B01J 19/32

(54) **KATALYSATORMODUL**
CATALYTIC MODULE
MODULE CATALYSEUR

(30) Priorität: 07.05.1998 DE 19820426
(43) Veröffentlichungstag der Anmeldung: 14.03.2001
(73) Patentinhaber: SIEMENS AKTIENGESELLSCHAFT, 80333 München (DE)
(72) Erfinder: SIGLING, Ralf, Alpharetta, GA 30022 (US); GANZMANN, Ingo, D-91054 Erlangen (DE)
(86) Internationale Anmeldenummer: DE9901379
(87) Internationale Veröffentlichungsnummer: WO99056875

(56) Entgegenhaltungen:
- DE-A- 19 706 544
- US-A- 4 285 838
- US-A- 4 382 046
- US-A- 5 320 428

## Beschreibung

Die Erfindung betrifft ein Katalysatormodul zum Einbau in einen Strömungskanal mit einem Einbaurahmen und einer Anzahl von darin angeordneten Katalysatorelementen mit einer Vielzahl von parallelen Kanälen, welches von einer Einströmseite zu einer Ausströmseite von einem Strömungsmedium durchströmbar ist, und bei dem die Katalysatorelemente in mindestens zwei in Strömungsrichtung voneinander beabstandeten Lagen angeordnet sind.

Ein derartiges Katalysatormodul mit mehreren Katalysatorelementen wird in einem Strömungskanal relativ großen Querschnitts betrieben. Beispielhaft hierfür ist der Einsatz im Abgaskanal einer Verbrennungsanlage zur Reinigung des Abgases, insbesondere zur Entfernung von Stickoxiden nach dem Verfahren der Selektiven Katalytischen Reduktion (SCR), von Kohlenwasserstoffen, Kohlenmonoxid und/oder Dioxinen aus dem Abgas. Eine Verbrennungsanlage ist beispielsweise eine Kesselanlage, ein kohle-, öl- oder gasbefeuertes Kraftwerk, eine Gasturbine, oder ein Verbrennungsmotor, insbesondere ein Dieselmotor. Auch eine Müllverbrennungsanlage emittiert die genannten Schadstoffe.

Die Katalysatorelemente des Moduls können Wabenelemente sein oder Plattenelemente, die aus mehreren in einer Halterungsvorrichtung übereinander gestapelten, parallel zur Strömungsrichtung ausgerichteten Platten bestehen. Zur Fixierung der einzelnen Katalysatorelemente in einem größeren Abgaskanal findet üblicherweise ein Einbaurahmen Verwendung, mit dem die Katalysatorelemente zu dem Katalysatormodul zusammengesetzt werden, und der wiederum in den Abgaskanal eingebaut wird.
Das Katalysatormodul eignet sich prinzipiell auch für den Einsatz in weiteren gasförmigen oder flüssigen Strömungsmedien zur Katalyse einer gewünschten Reaktion von im Strömungsmedium enthaltenen Reaktanden.

Das zu reinigende Strömungsmedium strömt in der Regel im wesentlichen laminar durch die Kanäle eines Katalysatorelementes. Hierdurch kann das in der Mitte eines Kanals strömende Medium nur noch durch den Mechanismus der Diffusion und nicht mehr durch Turbulenzen an die katalytisch aktive Oberfläche des Kanals gelangen, um dort zu der gewünschten Reaktion zu führen. Dadurch wird die theoretisch mögliche katalytische Aktivität des Katalysatormaterials nur zu einem Teil ausgenutzt. Für dieses Problem sind mehrere Lösungsansätze bekannt. In der DE 39 04 550 A1 ist ein Katalysatorkörper beschrieben, der eine Anzahl von in Strömungsrichtung hintereinander versetzt aneinandergesetzten Katalysatorelementen umfaßt. Hierdurch wird die laminare Strömung am Ende eines jeden Katalysatorelements unterbrochen. Diese Maßnahme löst das Problem jedoch nur unbefriedigend.

Aus der DE 41 22 807 A1 ist ein Katalysatorelement bekannt, in das quer zur Strömungsrichtung verlaufende breite und tiefe Schlitze eingebracht sind. Ein Schlitz durchtrennt jeweils eine Vielzahl von wabenförmigen Kanälen und unterbricht damit die laminare Strömung. Die tief in das Katalysatorelement einschneidenden Schlitze beeinträchtigen jedoch die mechanische Stabilität des Elements in erheblichem Maße; dieses Element zerbricht sehr leicht. Auch wird durch das Einbringen der Schlitze schon fertiggestelltes Katalysatormaterial wieder entfernt, was sich nicht günstig auf die Herstellungskosten des Elements auswirkt.

In der WO 94/26411 A1 wird ein Plattenelement für ein Katalysatormodul beschrieben, welches mittels Strukturen, die quer oder in einem Winkel zur Strömungsrichtung stehen, Turbulenzen innerhalb der Kanäle zwischen den einzelnen Platten erzeugt. Diese Art Katalysator hat jedoch den Nachteil, daß die Strukturen einen hohen Druckverlust verursachen. Im Strömungsmedium, z.B. einem Abgas, enthaltene Ruß- und Aschepartikel setzen sich durch die geringe Strömungsgeschwindigkeit des Abgases an einigen Stellen der Kanäle leicht ab.

Damit neigt ein derartiger Katalysator zum Verstopfen des Reaktionsraums.

Neben dem bisher nur unbefriedigend gelösten Problem der laminaren Strömung innerhalb der Kanäle sorgt ein weiteres Problem für Schwierigkeiten, die bei gleichmäßiger Ausnutzung der katalytisch aktiven Oberfläche theoretisch erzielbare Aktivität des Katalysatormoduls zu erreichen: Bei katalytischen Reaktionen, die ein in das Strömungsmedium eingebrachtes Reaktionsmittel erfordern, beispielhaft hierfür ist die Verwendung von Ammoniak NH₃ als Reduktionsmittel beim Verfahren der Selektiven Katalytischen Reduktion, ist es schwierig, eine gute Durchmischung von Strömungsmedium und Reaktionsmittel zu erzielen. Bei ungleichmäßiger Verteilung des Reaktionsmittels im Strömungsmedium kommt es in Kanälen, in die zu wenig Reaktionsmittel einströmt, nur in beschränktem Umfang zur katalytischen Reaktion.

Zur Verbesserung der Verwirbelung von Strömungsmedium und Reaktionsmittel vor Eintritt in das Katalysatormodul sind statische Mischer bekannt, die in Strömungsrichtung gesehen vor dem Katalysatormodul angeordnet sind. Sie beanspruchen jedoch nachteiligerweise eine nicht unerhebliche Wegstrecke im Nachlaufgebiet des Mischers zur Verwirbelung von Strömungsmedium und Reaktionsmittel(vergleiche DE 41 23 161 A1).

In US-A-5 320 428 sind verschiedene Anordnungen von zu Lagen zusammengefassten Katalysatorelementen offenbart, wobei die Lagen voneinander beabstandet in einem Strömungskanal angeordnet sind. Durch eine Verdrehung der Katalysatorelemente in den verschiedenen Lagen gegeneinander dienen die Katalysatorelemente gleichzeitig als statische Mischer.

Aufgabe der Erfindung ist es, ein Katalysatormodul anzugeben, bei dem die Nutzung der katalytisch aktiven Oberfläche bei gleichzeitig geringem Volumen das Katalysatormoduls verbessert wird.

Diese Aufgabe wird erfindungsgemäß durch ein Katalysatormodul gelöst, bei dem zusätzlich zwischen dem Lagen ein Streckgitter als ein statischer Mischer angeordnet ist.

Hierdurch wird erreicht, daß das Strömungsmedium, insbesondere das Abgas, innerhalb des Moduls mehrfach verwirbelt wird, da bei jedem Eintritt des Strömungsmediums in einen Kanal Turbulenzen auftreten. Hinter dem Kanal, in dem Freiraum zwischen den Lagen, treten weitere Turbulenzen auf, die eine Durchmischung des Strömungsmediums mit dem Reaktionsmittel bewirken. In die Kanäle der Katalysatorelemente der nachfolgenden Lage tritt somit ein besser durchmischtes Strömungsmedium ein. Bei Eintritt des Strömungsmediums in die Kanäle der nachfolgenden Lage treten wiederum Turbulenzen innerhalb der Kanäle auf, die einen Transport der Reaktanden zur katalytisch aktiven Oberfläche der Kanäle bewirken.

Mit der Erfindung wird durch den Freiraum zwischen den einzelnen Lagen gegenüber einem herkömmlichen Katalysatormodul mit durchgehenden Elementen in erheblichem Umfang Katalysatormaterial eingespart. Hierdurch werden die Herstellungskosten gesenkt. Die Gesamtaktivität des Moduls kann gegenüber einem herkömmlichen Modul trotz des eingesparten Katalysatormaterials erhalten bzw. noch gesteigert werden.

Zweckmäßigerweise beträgt die Länge der Katalysatorelemente in Strömungsrichtung 5 cm bis 50 cm. Bei üblichen Kanaldurchmessern und Strömungsgeschwindigkeiten bildet das Strömungsmedium bei dieser Länge innerhalb der Kanäle, zumindest in weiten Bereichen, noch keine völlig laminare Strömung bevor es die Ausströmseite der Lage erreicht. Als Folge ist der Strom des Strömungsmediums innerhalb der Kanäle durch Turbulenzen gekennzeichnet. Hierdurch wird ein kontinuierlich guter Transport der Reaktanden zur katalytisch aktiven Oberfläche der Kanäle erreicht und damit eine besonders gleichmäßige und intensive katalytische Nutzung der Oberfläche erzielt.

In weiterer Ausgestaltung der Erfindung beträgt der Abstand zwischen benachbarten Lagen jeweils 2 cm bis 15 cm. Dieser Abstand dient zur Verwirbelung eines zur Reaktion erforderlichen Reaktionsmittels durch Turbulenzen, die sich an der Ausströmseite der Katalysatorelemente bilden. Der genaue Abstand wird an die Betriebsbedingungen des Katalysatormoduls angepaßt. Bei üblichen Bedingungen liegt er bei wabenförmigen Katalysatorelementen beim fünf- bis zwanzigfachen Durchmesser der Kanäle, was bei üblichen Katalysatorelementen etwa 2 cm bis 15 cm entspricht.

In dem Raum zwischen den Lagen wird bei besonders vorteilhafter Ausgestaltung der Erfindung ein statischer Mischer angeordnet. Dieser führt zu einer zusätzlichen Verwirbelung von Strömungsmedium und Reaktionsmittel zwischen den Lagen. Hierbei wird der statische Mischer vorteilhafterweise direkt an die Ausströmseite der vorgeschalteten Lage angeordnet, um eine größtmögliche Nachlaufstrecke für optimale Verwirbelung zu erreichen.

In einfacher Weise kann die Verwirbelung von Strömungsmedium und Reaktionsmittel noch weiter verbessert werden, indem an der Einströmseite des Katalysatormoduls, also vor dessen erster Lage, ein statischer Mischer angeordnet wird. Da es nicht notwendig ist, eine weitgehend vollkommene Vermischung der Reaktanden schon vor dem Katalysatormodul zu erreichen, kann hierbei auf die übliche Anordnung weit vor der Einströmseite mit einer langen Nachlaufstrecke zwischen dem statischen Mischer und dem Katalysatormodul verzichtet werden. Durch eine Anordnung des statischen Mischers an der Einströmseite relativ dicht an den Katalysatorelementen, kann Raum im Abgaskanal eingespart werden. Insbesondere bei Einsatz des Katalysatormoduls in einer Gas- und Dampfanlage ist diese Anordnung von Vorteil. Der Grund dafür ist, daß aufgrund der knappen Platzverhältnisse bei Einplanung der Katalysatormodule in den Abhitzdampferzeuger die Reaktionsmitteleindüsung mit nur geringem Abstand zu dem Katalysatormodul erfolgt.

Als statischer Mischer kann z.B. ein Mischer nach der Siemens-Druckschrift A96001-U91-A224-X-7600 Verwendung finden, der eine Anzahl von Mischelementen umfaßt. Besonders kostengünstig in der Herstellung und platzsparend innerhalb des Katalysatormoduls ist die Ausführung des statischen Mischers in Form eines sogenannten Streckgitters. Hierbei kann ein handelsübliches Streckgitter Verwendung finden. Die zur Strömungsrichtung geneigten Blechflächen des Streckgitters sorgen für eine gleichmäßige Verwirbelung der Reaktanden.

Ausführungsbeispiele der Erfindung werden anhand von 3 Figuren näher erläutert. Es zeigen:
FIG 1 eine perspektivische Ansicht eines Katalysatormoduls, bei dem der Einbaurahmen aufgebrochen dargestellt ist;
FIG 2 eine Aufsicht auf ein Streckgitter;
FIG 3 einen Schnitt durch das Streckgitter aus FIG 2 gemäß der Linie III-III.

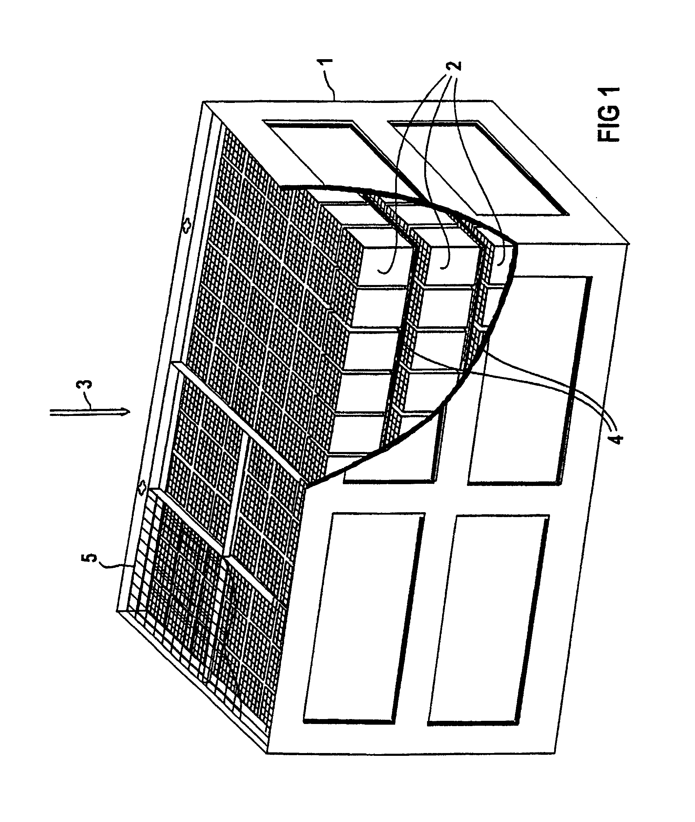

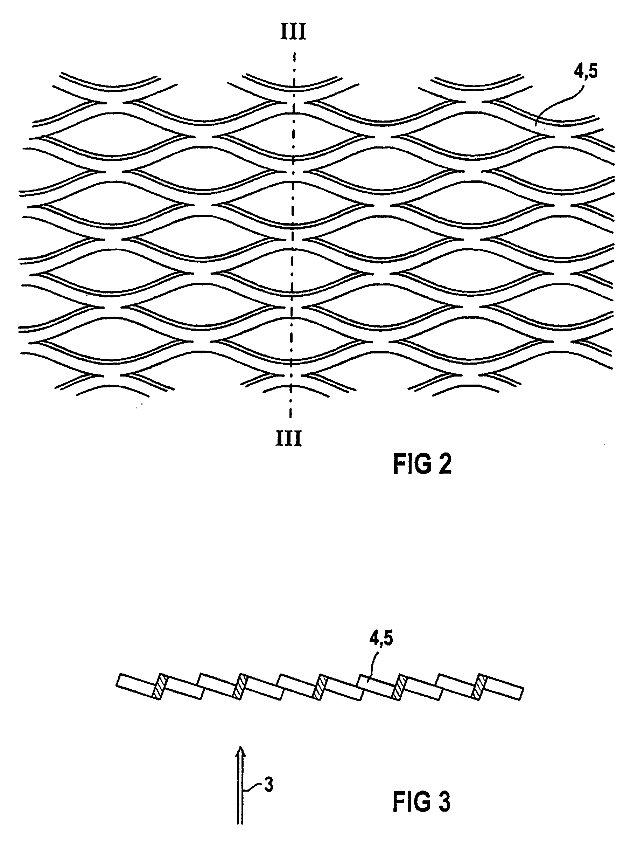

Die Figur 1 veranschaulicht ein besonders geeignetes Ausführungsbeispiel der Erfindung. Sie zeigt einen aufgebrochen dargestellten Einbaurahmen 1 eines Katalysatormoduls. In den Einbaurahmen 1 sind vier Lagen von Wabenelementen 2 befestigt (von denen in Figur 1 nur drei sichtbar sind). Sie sind in Strömungsrichtung 3 von einem Strömungsmedium durchströmbar. Die Länge der Wabenelemente 2 beträgt jeweils 20 cm. Die Länge ist so gewählt, daß die Strömung an der Ausströmseite einer jeden Lage gerade noch nicht ganz laminar geworden ist. Der Abstand zwischen den Lagen beträgt 8 cm. Zwischen den Lagen, direkt an der Ausströmseite der jeweils vorgeschalteten Lage, befinden sich als statische Mischer Streckgitter 4, die eine gleichmäßige Verwirbelung der Reaktanden innerhalb der freien Zone zwischen den Lagen bewirken. Ein solches Streckgitter 4 ist in den Figuren 2 und 3 gezeigt. Direkt vor der Einströmseite des Katalysatormoduls, an der Stelle, an der üblicherweise ein Maschendraht die Kanäle vor groben Aschepartikeln schützt, ist ein weiteres Streckgitter 5 angeordnet. Es erfüllt den Zweck des Maschendrahtes und sorgt gleichzeitig für eine teilweise Verwirbelung von Strömungsmedium und Reaktionsmittel vor Eintritt in das Katalysatormodul.

Das Katalysatormodul ist für den Einbau in den Abgaskanal einer Gas- und Dampfanlage vorgesehen. Die Wabenelemente 2 sind als Vollextrudat aus einer katalytisch aktiven Masse ausgebildet, welche die Materialien Titandioxid (TiO₂) zu 70 bis 95 Gew.-%, Wolframtrioxid (WO₃) und/oder Molybdäntrioxid (MoO₃) zu 5 bis 20 Gew.-% und Vanadinpentoxid (V₂O₅) zu weniger als 5 Gew.-% umfaßt. Dieses Katalysatormodul ist geeignet zur NOₓ-Reduzierung nach dem SCR-Verfahren. Hierbei ist vor der Einströmseite des Moduls eine Eindüsevorrichtung mit einer Vielzahl von über den Abgaskanalquerschnitt verteilten Düsen angeordnet, aus denen eine wäßrige Harnstofflösung als Reduktionsmittel in den Abgasstrom eingedüst wird.

Figur 2 zeigt in Draufsicht einen Ausschnitt aus einem Streckgitter 4,5, das aus einem 2 mm starken Stahlblech gefertigt wurde. Bei der Herstellung des Streckgitters 4,5 wurde das Stahlblech mit regelmäßig angeordneten Schlitzen versehen und auseinandergezogen.

In Figur 3 ist ein Schnitt durch das Streckgitter 4,5 entlang der Linie III-III aus Figur 2 dargestellt. Alle Flächen des Streckgitters 4,5 sind gegenüber der Strömungsrichtung 3 geneigt, wodurch das Strömungsmedium im Strom durch das Streckgitter 4,5 abgelenkt und verwirbelt wird.

## Patentansprüche

1. Katalysatormodul zum Einbau in einen Strömungskanal mit einem Einbaurahmen (1) und einer Anzahl von darin angeordneten Katalysatorelementen (2) mit einer Vielzahl von parallelen Kanälen, welches von einer Einströmseite zu einer Ausströmseite von einem Strömungsmedium durchströmbar ist, und bei dem die Katalysatorelemente (2) in mindestens zwei in Strömungsrichtung (3) voneinander beabstandeten Lagen angeordnet sind,
**dadurch gekennzeichnet, daß** zusätzlich zwischen den Lagen ein Streckgitter als ein statischer Mischer (4) angeordnet ist.

2. Katalysatormodul nach Anspruch 1, **dadurch** gekennzeichet, daß die Länge der Katalysatorelemente (2) in Strömungsrichtung (3) 5 cm bis 50 cm beträgt.

3. Katalysatormodul nach Anspruch 1 oder 2, **dadurch gekennzeichnet, daß** der Abstand zwischen benachbarten Lagen jeweils 2 cm bis 15 cm beträgt.

4. Katalysatormodul nach einem der Ansprüche 1 bis 3
**dadurch gekennzeichnet, daß** ein Streckgitter als ein statischen Mischer (5) an der Einströmseite angeordnet ist.

## Claims

1. Catalyst module for installation in a flow duct, with an installation frame (1) and with a number of catalyst elements (2) arranged therein and having a multiplicity of parallel ducts, a flow medium being capable of flowing through said catalyst module from an inflow side to an outflow side, and in which the catalyst elements (2) are arranged in at least two layers spaced from one another in the direction of flow (3), **characterized in that** an expanded mesh is additionally arranged as a static mixer (4) between the layers.

2. Catalyst module according to Claim 1, **characterized in that** the length of the catalyst element (2) in the direction of flow (3) is 5 cm to 50 cm.

3. Catalyst module according to Claim 1 or 2, **characterized in that** the spacing between adjacent layers is in each case 2 cm to 15 cm.

4. Catalyst module according to one of Claims 1 to 3, **characterized in that** an expanded mesh is arranged as a static mixer (5) on the inflow side.

## Revendications

1. Module de pot catalytique pour montage dans une gaine d'écoulement, comprenant un cadre de montage (1) et un certain nombre d'éléments catalyseurs (2) qui y sont disposés, ayant un grand nombre de canaux parallèles, module qui peut être traversé par un fluide en écoulement entre un côté admission et un côté sortie, et dans lequel les éléments catalyseurs (2) sont disposés dans au moins deux couches écartées l'une de l'autre dans la direction de l'écoulement (3), **caractérisé en ce qu'**en outre une grille en métal déployé, servant de mélangeur statique (4), est disposée entre les couches.

2. Module de pot catalytique selon la revendication 1, **caractérisé en ce que** la longueur des éléments catalyseurs (2) dans la direction de l'écoulement (3) est de 5 à 50 cm.

3. Module de pot catalytique selon la revendication 1 ou 2, **caractérisé en ce que** la distance entre les couches est dans tous les cas de 2 à 15 cm.

4. Module de pot catalytique selon l'une des revendications 1 à 3, **caractérisé en ce qu'**une grille en métal déployé est disposée pour servir de mélangeur statique (5) sur le côté admission.
